Europäisches Patentamt

European Patent Office

Office européen des brevets

(19)

(11) **EP 1 326 463 A1**

(12) **EUROPEAN PATENT APPLICATION**

(43) Date of publication:
**09.07.2003 Bulletin 2003/28**

(51) Int Cl.$^7$: **H04Q 7/38**, H04B 7/005,
H04L 12/56

(21) Application number: **02250083.9**

(22) Date of filing: **07.01.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Gruhl, Stefan**<br>**90443 Nuremberg (DE)**<br>• **Mueckenheim, Jens**<br>**Nuremberg (DE)** |
| (71) Applicant: **LUCENT TECHNOLOGIES INC.**<br>**Murray Hill, New Jersey 07974-0636 (US)** | (74) Representative: **Sarup, David Alexander et al**<br>**Lucent Technologies UK Limited,**<br>**5 Mornington Road**<br>**Woodford Green, Essex IG8 OTU (GB)** |
| (72) Inventors:<br>• **Bernhard, Urs Peter**<br>**90491 Nuremberg (DE)** | |

(54) **Method and apparatus for packet transmission scheduling by performing load control functionality**

(57)     The invention relates to the scheduling of multiple data flows in a packet switched mobile network.

It is an object of the present invention to provide a new and improved approach to maintain the QoS guarantees of at least some selected data flows even in case of a long term overload situation.

According to the invention for scheduling multiple data flows it is suggested to employ an admission control functionality (1a, 2a, 3a, 4a, 5a) depending on a request for the adding of a new data flow to be scheduled and/or to employ a congestion control functionality (1c, 2c, 3c, 4c) depending on varying environments in particular based on the mobility of a mobile station served by the network for maintaining quality of service requirements and/or guarantees even in long-term overload situations of a packet switched mobile network.

Fig. 1

EP 1 326 463 A1

**EP 1 326 463 A1**

**Description**

The invention relates to a method of scheduling multiple data flows in a packet switched mobile network and to an apparatus for a packet switched mobile network having such scheduling functionality.

In general, the invention addresses the problem of efficient scheduling of data flows in packet switched mobile networks for a transfer of data between a mobile station, also termed user equipment (UE) and a local base transceiver station (BTS) in downlink, i.e. in direction to the mobile station, and/or in uplink, i.e. in direction to the base transceiver station.

As known, in packet switched networks the task of multiplexing essentially reduces to the task of ordering packets and to then send them serially over a shared link. This process of serialization is referred to as scheduling.

Further, all transmissions having certain assigned quality requirements are associated with a data flow. Accordingly, a data flow usually is defined as a sequence of data packets from the same source to the same destination in the network, for which the user has certain QoS requirements.

The benefit of packet switching is based on the multiplexing gain, where some data flows benefit from unused resources from other temporarily inactive data flows. On the other hand side this service compared to a circuit switched service may result in a lack of predictability in such systems. Since the predictability of system behavior however, is one important measure of quality, there are quality of service (QoS) scheduling approaches trying to balance the amount and timing of the received service for each flow according to the respective data flow requirements.

However, especially in CDMA (Code Division Multiple Access) based packet switched mobile communication systems like an universal mobile telecommunication system (UMTS), there exist mainly two reasons for a system overload which additionally may result, in particular in case of a long-term system overload, in problems of the scheduling functionality.

Firstly, such a mobile communication system may become overloaded when a new user equipment has to be added and there are less free resources available then requested.

Secondly, the mobile communication system with existing data flows may become overloaded with regard to Quality of Service (QoS) metrics when the QoS compliant load offered by each existing data flow is larger than the average served load. In wire-line systems this potential problem is typically bound with the variation of the offered load and can be tackled by computing each data flow's activity with the contracted minimum QoS rate guarantees. In wireless networks however, usually the environmental conditions are changing, such as for example due to the mobility of the mobile stations. This in turn directly impacts, in particular in CDMA based systems the airlink resource consumption and thus the entire system capacity. Since the mobility of mobile stations is hardly predictable any load balancing mechanism is crucial.

Even if a given scheduling functionality is adapted to keep the scheduling system stable in the case of an overload for a short term, due to a self-limiting behaviour the scheduling functionality is unable to achieve QoS guarantees for all data flows during a continuous congestion situation. Thus, up to now a scheduling functionality of a packet switched mobile network is only able to handle short-term fluctuations autonomously even in case of overload, for example when the overload duration is in the range of some 100msec.

Consequently, such self-limiting behaviour causes a violation of the QoS in the long term, for example when the overload duration is about some seconds.

It is an object of the present invention to provide a new and improved approach to avoid the problems of overload handling in packet switched mobile networks having scheduling systems, as described above and in particular, to maintain the QoS guarantees of at least some selected data flows even in case of a long term overload situation.

The inventive solution is achieved by method, an apparatus and a software implementation product incorporating the features of appended claim 1, 9 and 10, respectively.

Advantageous and/or preferred embodiments or refinements are the subject matter of the respective dependent claims.

According to the invention for scheduling multiple data flows it is suggested to employ an admission control functionality depending on a request for the adding of a new data flow to be scheduled and/or to employ a congestion control functionality depending on varying environments in particular based on the mobility of a mobile station served by the network for maintaining quality of service requirements and/or guarantees even in long-term overload situations of a packet switched mobile network.

Accordingly, the such enhanced scheduling functionality is able to tackle problems caused in particular by long-term overload situations that can not be handled by known scheduling approaches.

In particular by using the inventive admission control functionality depending on the request for adding a new data flow to be scheduled a communication system having such enhanced scheduling functionality for a mobile network can preserve a certain degree of quality of service (QoS) for the active or ongoing data flows that are handled by the scheduler even in the case when a new data flow has to be added to the system. Moreover, by the use of the inventive congestion control functionality the communication system having such enhanced scheduling functionality can preserve a certain degree of quality of service for the active or ongoing data flows that are handled by the scheduler even in case the environmental conditions are changing, in particular based on the mobility of the mobile stations forming a specific problem of mobile communication networks such as UMTS.

Advantageously, it is ensured that the invention can be easily adapted to be used in uplink and downlink.

According to a preferred embodiment, the inventive approach is adapted to schedule an incoming data flow to be transmitted into a priority order, thereby regarding definable associated quality of service requirements. Thus the inventive approach is especially suited for communication systems using a combination of a layer 3 scheduler and of a medium access control-layer scheduler, especially for an UMTS network having downlink and uplink scheduling functionality.

It is further proposed, that the inventive approach is adapted in that an overall allocated transmission power for all active data flows can be dynamically adjusted within a defined limit transmission power for a flexible adjusting of the capacity of scheduling data flows.

For enabling an easy but effective admission control functionality it is further proposed to compare in case of a request for adding a new data flow an estimated transmission power necessary for that new data flow plus the actual minimum overall transmission power for maintaining the QoS requirements for the active data flows against an overload transmission power threshold to detect an overload condition.

Preferably, the congestion control functionality is supervising the maintaining of the actual QoS requirements depending on the allocated transmission power during definable time frames for detecting an overload condition.

In particular in case of performing the admission control functionality in combination with the congestion control functionality, according to the very preferred refinement the overload transmission power threshold comprises a safety factor for allowing a certain degree of reserve for the scheduling functionality in order to avoid a "ping-pong" behaviour.

Moreover, the invention proposes according to an advantageous refinement in case of detecting an overload condition the increasing of the allocated transmission power or the reduction of the offered traffic, in particular by removing at least one data flow from being scheduled and/or by rejecting the new data flow and/or by replacing at least one data flow to be scheduled by the new data flow depending on the respective detected overload condition and/or the quality of service guarantees.

According to a further improved enhancement it is suggested to determine a probability function for the occurrence of an overload condition depending on the time behaviour of the network and/or the environment for comparing it against a definable statistical threshold.

The invention is furthermore providing a corresponding adapted apparatus comprising a transceiver unit having means for scheduling multiple data flows in downlink and/or uplink thereby complying with quality of service constraints and means for performing the admission control functionality and/or the congestion control functionality in compliance with the inventive method. Finally, an implementation software product is suggested for performing the inventive method especially within that apparatus.

Subsequently, the invention is described in more detail based on a preferred embodiment and with regard to the accompanying drawings, in which:

Fig. 1     is schematically depicting a flow chart indicating a preferred admission control functionality according to the invention, and

Fig. 2     is schematically depicting a flow chart indicating a preferred congestion control functionality according to the invention.

Subsequently, the invention is exemplary described based on an preferred application, in particular implemented in a CDMA packet switched mobile communication system like UMTS having a scheduling system designed for downlink scheduling.

In general, due to the nature of communication systems based on a CDMA approach, the main resource in UMTS mobile communication systems is the transmission power, which has to be spent for a certain user. The downlink transmission power $P_{tri}$ of a data flow #i can be expressed as

$$P_{tri} \approx \left(\frac{E_B}{N_0}\right)_i \cdot \frac{R_{Bi}}{W} \cdot \frac{I_{0i}}{h_i} = R_{Bi} \cdot C_i, \qquad \text{equation 1}$$

wherein

$(E_B/N_0)_i$     denotes the received signal energy to noise ratio of a data flow #i,

$R_{Bi}$     denotes the current data rate used by data flow #i,

W     is the chip rate, which at the moment in UMTS based systems is defined as W = 3.84 Mchip/s,

$I_{0i}$     denotes the interference at the user equipment (UE) where the downlink data flow #i is addressed to, and

$h_i$     is the path-loss between the user equipment and the associated BTS, which is known as NodeB in UMTS.

As a consequence, resources in CDMA based systems depend not only on the data rate as handled by conventional scheduling methods or prior art schedulers but also on a factor C, which depends on several other parameters, like path-losses and interference. Hence, from equation 1 the factor $C_i$ of data flow #i may be defined as

$$C_i = \left(\frac{E_B}{N_0}\right)_i \cdot \frac{1}{W} \cdot \frac{I_{0i}}{h_i} \qquad \text{equation 2}$$

The $C_i$-value should be a significant part of a scheduling algorithm and can be obtained by measurements from the user equipment or the network. Depending on the time when it is used, the $C_i$-value preferably is calculated in two ways.

At or during the establishment of the data flow equation 2 may be used directly, where $(E_B/N_0)_i$ is initially determined from the bit error rate (BER) requirement of the respective radio bearer and $(I_{0i}/h_i)$ is estimated from a measurement that is signalled from the user equipment (UE) to the network.

After a communication channel is established with the radio bearer, there are no regular measurements of $(I_{0i}/h_i)$ available in the network. Additionally, $(E_B/N_0)_i$ may differ from the initial value, e.g. due to a varying environment. At this moment equation 1 is preferably used with

$$C_i = P_{tri}^{prev}/R_{Bi}^{prev} \qquad \text{equation 3}$$

where $P_{tri}^{prev}$ and $R_{Bi}^{prev}$ are the previous transmission power and previous data rate of data flow #i, respectively.

The actual total transmit power $P_{actual}$ of all active user equipments and hence, of all active data flows #i can be described by the sum of the single transmit powers given from equation 1 as follows:

$$P_{actual} \approx \Sigma_i\, R_{Bactuali} \cdot C_i \leq P_{max}. \qquad \text{equation 4}$$

$R_{Bactuali}$ is the actual data rate of data flow #i. By means of equation 4 a preferred function of scheduling may be briefly summarized as follows:

The scheduler decides regularly on the value of $R_{Bactuali}$ for each user equipment #i, in particular which user equipment can send which amount of traffic within a scheduling interval. The scheduling policy preferably depends on certain challenges, such as traffic amount, priorities and/or quality of services for example. The actual total transmit power $P_{actual}$ of all active data flows is limited by an overall available maximum transmit power $P_{max}$, which may be allocated by the radio resource management unit (RRM) to the packet switched radio bearer.

Thus the decision is based on the allocated transmit power $P_{actual} \leq P_{max}$ for the packet data users and as can be seen from equation 4 on the individual conditions at user equipment #i in terms of $C_i$.

Based thereon the inventive approach will be exemplary described, wherein preferably the two following assumptions should be made in advance:

The scheduling functionality autonomously limits the total transmit power $P_{actual}$ below the limit $P_{max}$ that is given by the radio resource control (RRC), and

within the scheduling procedure a priority scheme is implemented in such a way, that the traffic to serve the data flow with the requested quality of service gets high priority, whereby the remaining resources are used for enhancing the scheduling in pro-active manner with low priority.

Preferably, the inventive approach is implemented such, that the scheduling functionality incorporates two schedulers, each operating on a different protocol layer and both linked together, wherein each protocol data unit (PDU) of an incoming data flow to be transmitted is scheduled regarding pre-definable associates quality of service requirements into a priority list to be served.

In particular, the first scheduler operates on input data from Layer 3, i.e. the protocol data units. It receives the QoS requirements of each data flow and determines an order in which the protocol data units should receive service. As a result, the first or PDU scheduler takes the protocol data units from the incoming data flows. Each data flow is queued in its own FIFO-queue. They are scheduled regarding their QoS requirements into one common list for the second or medium access controlling (MAC) scheduler. This priority list is not termed a queue, because due to MAC-constraints it cannot be assured to serve this queue in a FIFO fashion. Thus, the first scheduler must be able to serve the data with the required data rates. For this purpose any rate conserving scheduling policy can be applied, such as a Weighted Fair Queuing (WF$^2$Q) or Virtual Clock Queuing (VCQ) for example. Furthermore, the first or PDU scheduler is operated on all active flows, i.e. with a non-empty PDU flow-queue.

The second or medium access controlling (MAC) scheduler serves the protocol data units, thereby trying to reflect the order indicating the priority in which the PDU scheduler wants the protocol data units to be served, while also taking certain constraints into account, such as bandwidth, delay, ARQ, timing, delay and/or power constraints. Preferably the MAC-scheduler is active at every frame, e.g. on a 10 ms base.

For linking the two schedulers, the MAC-scheduler operates on protocol data units in the priority list, while this list is dynamically changed by the first scheduler. As a consequence, the whole protocol data unit access preferably has to take place via reference to allow for protocol operation on demand techniques. This is accompanied by locking of the shared element, the PDU or priority list.

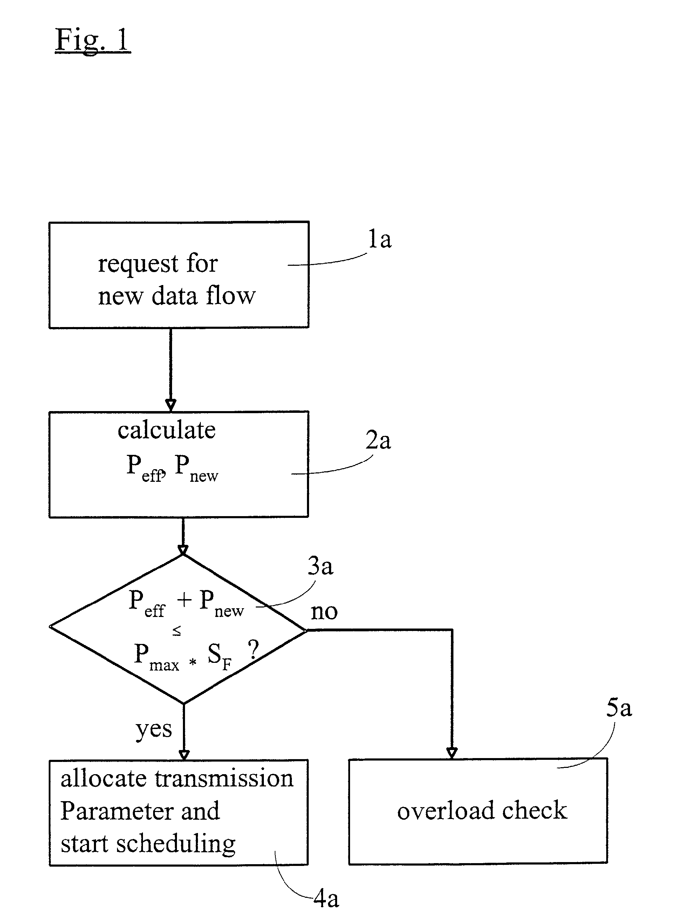

Based thereon, the principal of the inventive approach of additionally employing a load controlled scheduling concerning an admission control functionality depending on a request for the adding of a new data flow to be scheduled is depicted in Fig. 1. Regarding Fig. 1, the preferred, in particular software implemented realisation of the inventive admission control functionality within the scheduling functionality is as follows:

The admission control functionality is triggered in a first step 1a, when a request for adding a new data flow to the means for scheduling arrives. Then, in a second step 2a the effective power $P_{eff}$ of the actual quality of service traffic and an estimated power $P_{new}$ of the requested new data flow preferably are taken as a basis for performing the control functionality.

The effective power $P_{eff}$ may be obtained by

$$P_{eff} = \Sigma_i \, C_i \cdot R_{Bmini}, \qquad\qquad \text{equation 5}$$

where $R_{bmini}$ are the minimum required data rates to fulfil the quality of service requirements of data flow #i. Thus, $P_{eff}$ may be estimated within the underlying scheduling functionality as described. The estimated power $P_{new}$ of the requested new data flow may be calculated by

$$P_{new} = C_{est} \cdot R_{beff}. \qquad\qquad \text{equation 6}$$

The value for $C_{est}$ then could be obtained as described in equation 2 and $R_{beff}$ is the effective data rate of the new service that has to be requested for scheduling.

It is mentioned that, the effective data rate $R_{beff}$ is a function of the traffic behaviour and the quality of service requirements of the new service itself. One preferred option is to take $R_{beff} = R_{bmin}$, where $R_{bmin}$ is the minimum required data rate to fulfil the quality of service of the requested service. However, a further preferred option may be to take $R_{beff} = mean(R_b)$ as the main value.

Subsequently, during a third step 3a the means for performing such admission control functionality, practically embedded in a respective transceiver unit or base transceiver station of the communication system, preferably is checking whether the adding of the new data flow would lead to an overload condition. A possible admission criterion according to the invention could be:

$$P_{eff} + P_{new} \leq P_{max} \cdot S_F \qquad\qquad \text{equation 7}$$

wherein $S_F$ is a safety factor which preferably is set to $S_F < 1$ to allow a certain degree of reserve for the scheduling means in order to avoid a "ping-pong" behaviour when the admission control is combined with the inventive congestion control functionality described below.

If equation 7 is met, then the new requested data flow can be admitted and hence it could be proceeded with step 4a, according to which the request for adding the new data flow has been admitted and the transmission parameters, in particular data rates, the transport formats and spreading codes are allocated. The new data flow is then included into the real scheduling process. It is mentioned that the allocation of the data rates for each data flow has a strong impact on the system efficiency that the scheduler can achieve.

If however, equation 7 is not met as a result of the checking step 3a, then the new request can not be admitted. As a consequence it is proceeded with step 5a of Fig. 1 performing an overload check preferably including the two following actions:

Firstly, it may be checked, whether $P_{max}$ can be increased up to a value that again allows to support the current and the requested data flows, i.e. to again fulfil the admission criterion.

Secondly, if the increase of the overall available maximum transmit power $P_{max}$ should be not possible, the offered load has to be reduced. One approach therefore is to simply reject the new request. This may be the preferred controlling functionality in the general case, where all ongoing traffic should get priority over a new request. Another possibility according to the invention is to remove one or more ongoing data flows from the scheduling means in order to insert the new one. This may be the preferred option for handling calls with priority, such as for example emergency calls, where resources shall be pre-empted in order to proceed the priority call.

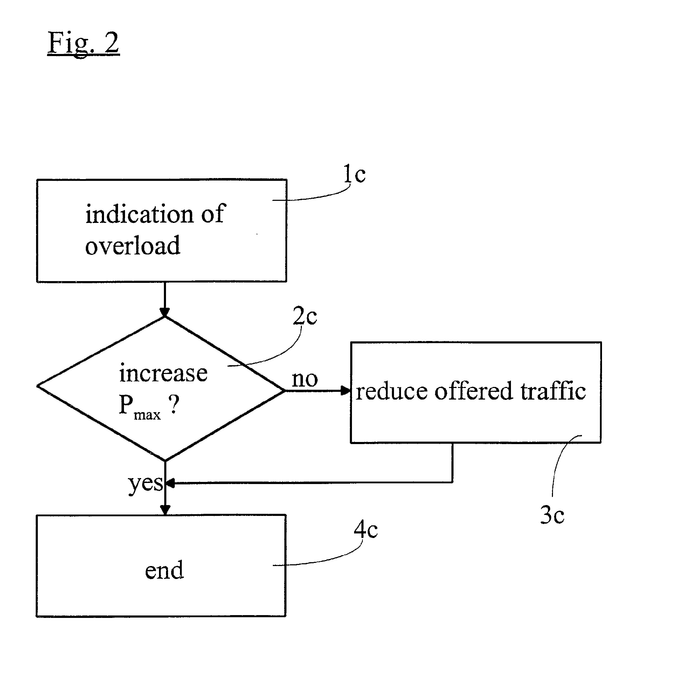

Regarding Fig. 2 schematically depicting the principle of the inventive scheduling approach of employing congestion control functionality the preferred control functionality based on the exemplar downlink scheduling process should be as follows.

During the scheduling process, the congestion control procedure according to Fig. 2 is triggered in a first step 1c when the scheduling means indicates an overload situation.

Thus for indicating any overload situation the scheduling functionality preferably is adapted to regularly check whether it is able to achieve the QoS requirements with the currently allocated maximum transmission power $P_{max}$.

Normally the time frame for performing this check will be much larger than the scheduling interval, because the scheduling means usually is only in overload if it can not serve the "long-term" QoS requirements of the data flows. Short term fluctuations in the range of some 100msec often can be handled by any basic scheduling functionality. If the scheduling means is not able to serve all data flows during such a, preferably definable long-term of for example some seconds with the required QoS the scheduling means indicates the overload situation.

Based on an indicated overload situation it is proposed to check whether a larger amount of maximum transmit power $P_{max}$ can be allocated to the scheduling functionality, as indicated in Fig. 2 by reference sign 2c.

If the allocated maximum transmit power $P_{max}$ can be increased up to a value that again allows to support all current data flows then this new value for $P_{max}$ will be reserved for the scheduling usage and will be used further on. As a result, the congestion control procedure is finished for the moment as indicated by reference sign 4c of Fig. 2 and is waiting until a new overload situation is indicated by the scheduling functionality.

If however the allocated maximum transmit power $P_{max}$ can not be increased anymore then, according to step 3c of Fig. 2 such overload situation has to be overcome, since the quality of service guarantees can not be fulfilled anymore. As a consequence, the offered traffic must be reduced. One preferred approach therefore is to remove one or several data flows from the scheduling list, in particular depending on the their priority order, in order to reduce the transmit power. Based thereon it is necessary to remove so many data flows that the needed transmit power is reduced below the allocated maximum transmit power $P_{max}$ prior to proceeding this step 4c, i.e. to finish the congestion control procedure for the moment and to wait until a new overload situation is indicated by the scheduling functionality.

By combining the congestion control functionality with the admission control functionality, an overload situation according to step 1c of Fig. 2 even can be indicated in case of a transition from step 3a of Fig. 1 to step 5a due to a request for adding a new data flow.

Thus, it is obvious for a person skilled in the art that in case of combining both load control functionality's, the safety factor $S_F$ used in equation 7 during step 3a of Fig. 1 should be less than 1 to avoid the afore-mentioned "ping-pong" behaviour. Otherwise, if $S_F$ is set to 1, the incorporation of a requested new data flow into the scheduling process, in particular by an actual need of the entire allocated maximum transmit power $P_{max}$ according to equation 7, may result in the detection of an overload situation by the congestion control functionality during a succeeding step.

In the exemplar inventive approach as described above only single values for $P_{eff}$, $R_{beff}$ and $C_{est}$ have been used in order to get the decision on admission control. For an improved enhancement of the overload control functionality it is further proposed to use time dependent functions, such as $P_{eff}(t)$, $R_{beff}(t)$ and $C_{est}(t)$ in order to determine, whether a new service can be admitted or not.

Then, the function $P_{eff}(t)$ describes the historical behaviour of the scheduling means itself, the function $R_{beff}(t)$ is the description of the traffic behaviour that is determined for example by the service class and finally the function $C_{est}(t)$ would characterise the variations of the environment, in particular based on equation 2. Since the principle of using time dependent functions is similar to the known concept of traffic/service envelopes as described in detail for example in "Inter-Class resource sharing using statistical service envelopes", J. Qiu and E. Knightly, Proceedings of IEEE INFOCOM '99, New York, NY, March 1999 and hence should be obvious for a person skilled in the art it is not further described in detail.

However, for such a functional description the admission criterion in equation 7 preferably is enhanced as:

$$\Pr[P_{eff}(t) + C_{est}(t) \cdot R_{beff}(t) \geq P_{max}] \leq \delta_{AC}, \qquad \text{equation 8}$$

where Pr[x] is indicating the probability for the occurrence of event x. In this case $\delta_{AC}$ is the statistical call admission threshold. Based thereon generally the same procedure for the inventive admission control can be used as above described by replacing equation 7 with equation 8.

It is further mentioned that substantially the same functionality with regard to the admission control and congestion control is also usable for an uplink scheduling system.

However, for the uplink data transmission the radio access network does not have such a complete or perfect knowledge in comparison to the downlink.

Accordingly, with regard to equation 1 the corresponding adapted equation can be expressed for the uplink transmission power $P_{tri}$ of data flow #i as

$$P_{tri} \approx \left(\frac{E_B}{N_0}\right)_i \cdot \frac{R_{Bi}}{W} \cdot \frac{I_0}{h_i} = K \cdot R_{Bi} \cdot C_i, \qquad \texttt{equation 9}$$

where
$I_0$ denotes the interference at the NodeB of the cell where the user equipment (UE) is located and may include an intercell interference and thermal noise and
the signal to noise ratio $E_b/N_0$ and the interference $I_0$ is preferably measured periodically in the NodeB and reported to the radio network control unit (RNC) where the scheduling mechanism preferably is located.

As can be seen from equation 9, in addition to the data rate and the factor C the resources in uplink depend on the factor K. The factor K can be given as

$$K = \frac{E_b}{N_0} \cdot \frac{I_O}{W}, \qquad \text{equation 10}$$

and the $C_i$-value is the inverse of the path-loss $h_i$, i.e.

$$C_i = \frac{1}{h_i}. \qquad \text{equation 11}$$

Thus, if the user equipment is located nearby the NodeB, the $C_i$-value is nearly one. If the user equipment, however, is far away from the NodeB, then the $C_i$ increases to values much greater than one. Preferably, the calculation of the $C_i$-value is carried out by use of one the following three methods.

Firstly, the $C_i$-value can be directly obtained from the uplink path-loss. In this case, however, the UE has to report regularly the estimated path-loss. Secondly, if a downlink channel exists, then the downlink path-loss might be used. By utilizing the associated downlink transmission power, which can be measured at the NodeB, the downlink path-loss may be obtained. Thirdly, when location services are supported by the network, the path-loss may also be obtained from the knowledge of the position of the user equipment within the cell.

Further, in uplink there may be two additional main restrictions for uplink scheduling. The first one is based on the target to hold the interference of the respective own cell within a certain limit. Using a received signal power $P_{reci} = P_{tri} h_i$ and equation 9, the first restriction with regard to the actual total receiving power $P_{recactual}$ may be obtained by

$$P_{recactual} \approx K \cdot \Sigma_i R_{Bactuali} \leq P_{max}(intra), \qquad \text{equation 12}$$

wherein $P_{max}$ (intra) is the allocated maximal transmit power for holding the interference of the respective own cell within the limit.

The second restriction is based on the target to hold the impact of transmissions from the respective own cell towards adjacent cells within a certain limit. Accordingly, this restriction may be obtained by

$$P_{actual} \approx K \cdot \Sigma_i \, R_{Bactuali} \cdot C_i \leq P_{max}(inter). \qquad \text{equation 13}$$

Consequently, based on these two main constrains in the uplink there is an optimisation problem not only in one dimension as compared to a downlink but within two dimensions. Both of these allocated maximal transmit powers $P_{max}(intra)$ and $P_{max}(inter)$ can be combined with a safety factor, as described for the downlink. Moreover, due to limited capacities there might be a further restriction of the transmission power of a single user equipment, that may be given as:

$$P_{tri} = K \cdot R_{Bi} \cdot C_i \leq P_{max}(UE). \qquad \text{equation 14}$$

Based on these constraints, the inventive scheduling admission and congestion control functionality can be employed in a corresponding way as described in detail for the downlink even in uplink by using the respective adapted power restrictions.

Moreover, even the invention is exemplary described within scheduling systems for the UMTS downlink and the UMTS uplink, the invention is not restricted to systems using a combination of layer 3 and MAC layer scheduling means but can be used in general scheduling systems, where the task of efficient overload handling on MAC level has to be served.

**Claims**

1. Method of scheduling multiple data flows for maintaining quality of service requirements and/or guarantees in a packet switched mobile network, especially in a CDMA based network, comprising the steps of:

    performing an admission control functionality (1a, 2a, 3a, 4a, 5a) depending on a request for the adding of a new data flow to be scheduled and/or
    performing a congestion control functionality (1c, 2c, 3c, 4c) depending on varying environments.

2. Method of claim 1, further **characterized by** the steps of performing the admission control functionality and/or the congestion control functionality for uplink scheduling and/or for downlink scheduling.

3. Method of claim 1 or 2, further **characterized by** scheduling an incoming data flow to be transmitted regarding definable and/or pre-definable associated quality of service requirements into a priority list to be served.

4. Method of claim 1, 2 or 3, further **characterized by** the step of dynamically adjusting an overall allocated transmission power ($P_{max}$) for all active data flows for a cell within a defined limit transmission power.

5. Method of any of the preceding claims, wherein the step of performing admission control functionality comprises the steps of determining (2a) an actual minimum overall transmission power ($P_{eff}$) and a transmission power ($P_{new}$) necessary for the new data flow for comparing the sum thereof against an overload condition ($P_{max}$) or an overload condition including a safety factor ($S_F$) for detecting an overload condition.

6. Method of any of the preceding claims, wherein the step of performing congestion control functionality comprises the step of supervising (1c) the complying with the QoS requirements depending on the allocated transmission power ($P_{max}$) during definable time frames for detecting an overload condition.

7. Method of any of the preceding claims, further comprising the steps of increasing (5a, 2c) the allocated transmission power ($P_{max}$) or of reducing (5a, 3c) the offered traffic, in particular by removing at least one data flow from being scheduled and/or by rejecting the new data flow and/or by replacing at least one data flow to be scheduled by the new data flow, depending on a respective detected overload condition and/or quality of service guarantees.

8. Method of any of the preceding claims, further comprising the steps of determining a probability function depending on the time behaviour of the network and/or the environment for comparing it against a definable statistical overload threshold.

9. Apparatus for a packet switched mobile network, especially for a CDMA based network, comprising a transceiver unit having

means for scheduling a multiple data flow thereby complying with quality of service constraints and

associated means for performing an scheduling admission control functionality depending on a request for the adding of a new data flow to be scheduled and/or for performing an scheduling congestion control functionality depending on varying environments.

10. Implementation software product for performing a method of any of claims 1 to 8, especially in an apparatus of claim 9.

## Fig. 1

```
┌─────────────────────┐
│     request for     │────── 1a
│   new data flow     │
└─────────────────────┘
           │
           ▼
┌─────────────────────┐
│     calculate       │────── 2a
│   P_eff, P_new      │
└─────────────────────┘
           │
           ▼
        ╱      ╲                3a
      ╱  P_eff + P_new ╲
     ╱        ≤          ╲──── no ──────┐
      ╲  P_max * S_F ?  ╱               │
        ╲      ╱                        │
         yes                            │
          │                            5a
          ▼                             ▼
┌─────────────────────┐     ┌─────────────────────┐
│ allocate transmission│     │   overload check    │
│ Parameter and       │     │                     │
│ start scheduling    │     │                     │
└─────────────────────┘     └─────────────────────┘
          │
          4a
```

Figure blocks:
- request for new data flow — 1a
- calculate $P_{eff}$, $P_{new}$ — 2a
- $P_{eff} + P_{new} \leq P_{max} * S_F$ ? — 3a
- allocate transmission Parameter and start scheduling — 4a
- overload check — 5a

## Fig. 2

indication of overload — 1c

increase $P_{max}$ ? — 2c

no → reduce offered traffic — 3c

yes

end — 4c

**European Patent Office**

## EUROPEAN SEARCH REPORT

Application Number

EP 02 25 0083

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 497 504 A (ACAMPORA ANTHONY S ET AL) 5 March 1996 (1996-03-05) * column 2, line 41-62 * --- | 1-3,7-10 | H04Q7/38 H04B7/005 H04L12/56 |
| X | GB 2 360 909 A (MOTOROLA INC) 3 October 2001 (2001-10-03) * page 11, line 9-18 * --- | 1-6,9,10 | |
| A | US 6 028 851 A (AAKE WILLARS PER HANS ET AL) 22 February 2000 (2000-02-22) * column 3, line 12-40 * ----- | 1-10 | |
| | | | TECHNICAL FIELDS SEARCHED (Int.Cl.7) H04Q H04B H04L |

The present search report has been drawn up for all claims

| Place of search | Date of completion of the search | Examiner |
|---|---|---|
| THE HAGUE | 26 June 2002 | Weinmiller, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**　　　　EP 02 25 0083

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2002

| Patent document cited in search report | | Publication date | Patent family member(s) | | Publication date |
|---|---|---|---|---|---|
| US 5497504 | A | 05-03-1996 | AU | 2588695 A | 05-12-1995 |
| | | | WO | 9531868 A1 | 23-11-1995 |
| GB 2360909 | A | 03-10-2001 | AU | 3930301 A | 15-10-2001 |
| | | | WO | 0176096 A1 | 11-10-2001 |
| US 6028851 | A | 22-02-2000 | AU | 9287498 A | 23-04-1999 |
| | | | BR | 9812836 A | 08-08-2000 |
| | | | CA | 2303089 A1 | 08-04-1999 |
| | | | CN | 1271504 T | 25-10-2000 |
| | | | EP | 1018280 A1 | 12-07-2000 |
| | | | JP | 2001518770 T | 16-10-2001 |
| | | | WO | 9917582 A1 | 08-04-1999 |

EPO FORM P0459